(19) **Europäisches Patentamt**

**European Patent Office**

**Office européen des brevets**

(11) **EP 1 067 397 B1**

(12) **EUROPÄISCHE PATENTSCHRIFT**

(45) Veröffentlichungstag und Bekanntmachung des Hinweises auf die Patenterteilung:
**25.01.2006 Patentblatt 2006/04**

(51) Int Cl.:
*G01S 13/56* (2006.01)     *G01S 13/34* (2006.01)
*G08B 13/19* (2006.01)

(21) Anmeldenummer: **99112885.1**

(22) Anmeldetag: **03.07.1999**

(54) **Bewegungsmelder nach dem Doppler-Prinzip**

Motion detector based on the Doppler principle

Détecteur de mouvement à effet Doppler

(84) Benannte Vertragsstaaten:
**AT BE CH CY DE DK ES FI FR GB GR IE IT LI LU MC NL PT SE**

(43) Veröffentlichungstag der Anmeldung:
**10.01.2001 Patentblatt 2001/02**

(73) Patentinhaber: **Siemens Schweiz AG**
**8047 Zürich (CH)**

(72) Erfinder: **Hegnauer, Stefan**
**8600 Dübendorf (CH)**

(74) Vertreter: **Weise, Wolfgang**
**Siemens Schweiz AG**
**Intellectual Property Department Zug**
**Gubelstrasse 22**
**6300 Zug (CH)**

(56) Entgegenhaltungen:
**US-A- 4 203 113**

**Beschreibung**

Die Erfindung betrifft einen Bewegungsmelder nach dem Doppler-Prinzip, mit einem Mikrowellenmodul zur Aussendung eines mindestens zwei Frequenzen enthaltenden Mikrowellensignals in einen Überwachungsraum und zum Empfang der aus diesem reflektierten Strahlung, und mit einer an das Mikrowellenmodul angeschlossenen Auswertestufe, in welcher aus der empfangenen reflektierten Strahlung erste und zweite Dopplersignale erzeugt werden, welche einen der Entfernung eines sich im Überwachungsraum bewegenden Objekts proportionalen Phasenunterschied aufweisen.

Nach dem Doppler-Prinzip arbeitende Bewegungsmelder, die entweder alleine oder als sogenannte Dualmelder in Verbindung mit Passiv-Infrarotmeldern verwendet werden, haben die Schwäche, dass nahe beim Melder befindliche kleine Objekte, wie beispielsweise Insekten oder Regentropfen, von weiter entfernten, grösseren Objekten nur sehr schwer unterscheidbar sind, so dass eine Unterscheidung von weiter entfernten Menschen von kleinen Haustieren in mittlerer Entfernung und von ganz nahen Insekten stark erschwert oder gar verunmöglicht wird. Ausserdem besteht das Problem, dass oszillierende ortsfeste Gegenstände, wie beispielsweise vom Wind bewegte Vorhänge oder Fensterflügel oder auch Ventilatoren, von tatsächlichen Bewegungsvorgängen nicht unterschieden werden können. Aufgrund dieser Nachteile weisen diese Bewegungsmelder eine relativ hohe Fehlalarmrate auf und werden daher praktisch ausschliesslich als Dualmelder eingesetzt.

Zur Vermeidung der erwähnten Nachteile wurde in der US-A- 4 697 184 vorgeschlagen, ein Mikrowellensignal mit alternierenden Frequenzen auszusenden und aus dem von einem Objekt im Überwachungsraum reflektierten Signal erste und zweite Dopplersignale abzuleiten, welche einen der Entfernung des Objekts proportionale Phasenunterschied aufweisen. Der Phasenunterschied wird gemessen und es wird ein Alarmsignal ausgelöst, wenn dieser für eine bestimmte Dauer einen vorgegebenen Grenzwert überschreitet. Bei diesem System werden Störungen durch Mehrwegausbreitung, wie beispielsweise Reflexionen an Wänden, Boden und Decke, und Rauschen nicht oder nur sehr schwach unterdrückt.

Der US-A-4 203 113 zeigt auch ein Mikrowellensignal mit alternierenden Frequenzen für die Messung von Entfernung und Bewegungsrichtung.

Durch die Erfindung soll nun ein Bewegungsmelder der eingangs genannten Art angegeben werden, bei dem die genannten Störungen sicher unterdrückt werden.

Diese Aufgabe wird erfindungsgemäss dadurch gelöst, dass die Bestimmung des Phasenunterschieds durch eine Integraltransformation erfolgt.

Die Integraltransformation hat gegenüber anderen Verfahren zur Phasenmessung den Vorteil, dass Rauschen und andere Störungen besser unterdrückt werden.

Eine erste bevorzugte Ausführungsform des erfindungsgemässen Bewegungsmelders ist dadurch gekennzeichnet, dass die Integraltransformation zusätzlich zur Bestimmung des Vorzeichens der Phasendifferenz und/oder der Radialgeschwindigkeit des betreffenden Objekts relativ zum Melder verwendet wird.

Eine zweite bevorzugte Ausführungsform des erfindungsgemässen Bewegungsmelders ist dadurch gekennzeichnet, dass die Integraltransformation zusätzlich zur Bestimmung der Signalstärke des empfangenen Signals verwendet wird.

Eine dritte bevorzugte Ausführungsform des erfindungsgemässen Bewegungsmelders ist dadurch gekennzeichnet, dass dem Ausgang des Mikrowellenmoduls zwei Kanäle nachgeschaltet sind, in denen die Signale verstärkt, gefiltert und je einem Analog-/Digitalwandler zugeführt werden, und dass die Integraltransformation darin besteht, die Beträge der Signale in den beiden Kanälen zu integrieren, die Signale zu multiplizieren und das Ergebnis dieser Multiplikation ebenfalls zu integrieren, sowie die sich ergebenden Signal zu dividieren.

Eine vierte bevorzugte Ausführungsform des erfindungsgemässen Bewegungsmelders ist dadurch gekennzeichnet, dass das Mikrowellenmodul zur Aussendung eines mehr als zwei Frequenzen enthaltenden Mikrowellensignals ausgebildet ist.

Diese Ausführungsform hat den Vorteil, dass durch die Aussendung von mehr als zwei Frequenzen Mehrdeutigkeiten, wie sie beim Zweifrequenzbetrieb auftreten können, aufgelöst werden. Solche Mehrdeutigkeiten können beispielsweise durch weit entfernte Reflexionen verursacht sein, die bei dem in der genannten US-A-4 697 184 beschriebenen Bewegungsmelder durch eine relativ aufwendige und damit teure Hardware unterdrückt werden.

Eine fünfte bevorzugte Ausführungsform des erfindungsgemässen Bewegungsmelders ist dadurch gekennzeichnet, dass dem Ausgang des Mikrowellenmoduls eine der Anzahl der Frequenzen entsprechende Zahl von Kanälen nachgeschaltet ist, in denen die Signale verstärkt, gefiltert und je einem Analog-/Digitalwandler zugeführt werden, und dass die Integraltransformation durch eine Fourier-Transformation, eine Fast-Fourier-Transformation oder eine Wavelet-Transformation gebildet ist.

Eine sechste bevorzugte Ausführungsform des erfindungsgemässen Bewegungsmelders ist dadurch gekennzeichnet, dass das Mikrowellenmodul und die Auswertestufe Teil eines ersten Detektors eines Dualmelders bilden, welcher ausserdem einen zweiten Detektor, vorzugsweise einen Passiv-Infrarotdetektor enthält, und dass die Signale des ersten und diejenigen des zweiten Detektors einer gemeinsamen Verarbeitungsstufe zugeführt sind, in welcher eine Verknüpfung der genannten Signale erfolgt.

Bei einer weiteren bevorzugten Ausführungsform des erfindungsgemässen Bewegungsmelders enthält das Ergebnis der Verknüpfung eine Aussage über die Qualität des sich im Überwachungsraum bewegenden Objekts.

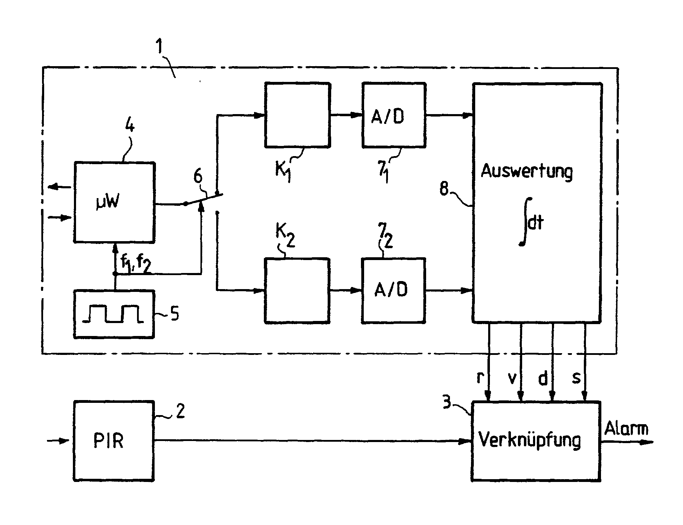

Im folgenden wird die Erfindung anhand eines in der einzigen Zeichnung dargestellten Ausführungsbeispiels näher erläutert. Dieses zeigt ein Blockschema eines aus einem erfindungsgemässen Mikrowellenmelder und aus einem Passiv-Infrarotmelder bestehenden Dualmelders.

Der dargestellte Dualmelder besteht aus einem Mikrowellenmelder 1, einem Passiv-Infrarotmelder 2 und einer gemeinsamen Verarbeitungsstufe 3, an deren Ausgang bei Vorhandensein eines unbefugten Eindringlings in dem vom dargestellten Melder überwachten Überwachungsraum ein Alarmsignal erhältlich ist. Der Mikrowellenmelder 1 enthält ein Mikrowellenmodul 4 zur Aussendung und zum Empfang von Mikrowellen. Dem Mikrowellenmodul 4 ist ein Mikrowellengenerator 5 zugeordnet, der ein Mikrowellensignal mit mindestens zwei festen Frequenzen $f_1$ und $f_2$ erzeugt, welche dem Mikrowellenmodul 4 und einem diesem nachgeschalteten Schalter 6 periodisch zugeführt werden. Das Mikrowellenmodul 4 wird also periodisch zwischen den beiden Frequenzen $f_1$ und $f_2$ umgeschaltet und der Schalter 6 wird entsprechend betätigt.

In der Radartechnik sind verschiedene Verfahren zur Abstandsmessung bekannt, wobei die beiden gebräuchlichsten entweder die Zeit, die ein kurzer Sendepuls von der Sendeantenne zum Objekt und zurück zur Empfangsantenne benötigt (Pulsradar mit Laufzeitmessung) messen, oder die Differenzfrequenz zwischen dem ausgesandten Signal mit der Frequenz f zur Zeit t und dem Empfangssignal, das zur Zeit t-$\Delta$ mit einer anderen Frequenz f-$\Delta$f gesendet wurde (FM-Radar).

Wenn in einem Doppler-Radar zwei oder mehr fixe Frequenzen verwendet werden, dann haben die entsprechenden Dopplersignale am Ausgang des Empfangsmischers zueinander eine definierte Phasenbeziehung. Im Fall von zwei fixen Frequenzen (Diplex) $f_1$ und $f_2$ mit einem Frequenzunterschied $\Delta\omega$ ergibt sich der Phasenunterschied $\Delta\varphi$ am Ausgang des Empfangsmischers zu

$$\Delta\varphi \cong (2\Delta\omega/c)r$$

wobei c die Lichtgeschwindigkeit und r die gesuchte Distanz vom Melder zu dem die Mikrowellenstrahlung reflektierenden Objekt ist. Diese Gleichung gilt unverändert auch für den Fall von mehreren fixen Frequenzen (Multiplex). Die Phasenmessung ist zyklisch; die entstehende Mehrdeutigkeit des Resultats für die Distanz r muss durch Begrenzung der Reichweite des Mikrowellenmoduls oder ein geeignetes Frequenzmultiplex beseitigt werden.

Durch den Schalter 6 wird das Ausgangssignal des Mikrowellenmoduls 4 auf zwei identische Kanäle $K_1$ und $K_2$ verteilt, in denen die Signale verstärkt und gefiltert und je einem Analog-/Digitalwandler $7_1$ bzw. $7_2$ zugeführt werden. Die digitalen Signale werden anschliessend nach einer weiteren digitalen Filterung zur Entfernung von Störungen (nicht dargestellt) einer Auswertestufe 8 zugeführt, in welcher im wesentlichen eine Integraltransformation der Signale der beiden Kanäle $K_1$ und $K_2$ erfolgt. Integraltransformation ist ganz allgemein die durch einen Integraloperator bewirkte Transformation einer funktion, der sogenannten Objektfunktion, in eine andere Funktion, die sogenannte Resultatfunktion, die auch als Bild der Integraltransformation bezeichnet wird, um einfacher zu handhabende Resultatfunktionen zu erhalten und aus deren Behandlung leichter Ergebnisse über die Objektfunktion zu erzielen.

Beispiele für eine Integraltransformation sind Fourier-Transformation, Fast-Fourier-Transformation, Laplace-Transformation und Wavelet-Transformation. Diese Verfahren werden im vorliegenden Fall besonders dann angewendet, wenn das Mikrowellensignal mehr als zwei Frequenzen enthält und dementsprechend auch mehr als zwei Kanäle $K_1$ und $K_2$ vorgesehen sind. Bei nur zwei Frequenzen $f_1$ und $f_2$ und entsprechend zwei Kanälen $K_1$ und $K_2$ besteht die Integraltransformation darin, die Beträge der Signale in den beiden Kanälen $K_1$ und $K_2$ zu integrieren, die Signale zu multiplizieren und das Ergebnis der Multiplikation ebenfalls zu integrieren und dann die sich ergebenden drei Integrale durcheinander zu dividieren. Diese Division liefert den Cosinus des Phasenunterschieds $\Delta\varphi$ und damit unmittelbar die gesuchte Distanz r. Zusätzlich zur Distanz r kann aus der Integraltransformation auch die Bewegungsrichtung (Vor-zeichen d), die Radialgeschwindigkeit v des Objekts relativ zum Melder und die Signalstärke s des empfangenen Signals abgeleitet werden.

Wenn beispielsweise eine Fourier-Transformation verwendet wird, dann werden pro Kanal direkt die Grössen Frequenz (proportional zur Radialgeschwindigkeit), Phase und Amplitude gewonnen. Die Signale eines bewegten Objekts ergeben in allen Kanälen annähernd dieselbe Frequenz und Amplitude, aber unterschiedliche Phase. Dabei ist der Betrag der Phasendifferenz zweier Kanäle proportional zum Abstand r, und das Vorzeichen d der Phasendifferenz zweier Kanäle ergibt die Bewegungsrichtung. Wenn die Phasendifferenz zweier Kanäle derart gebildet wird, dass die Phase resultierend aus dem Kanal mit der höheren Senderfrequenz von der Phase resultierend aus dem Kanal mit einer tieferen Senderfrequenz subtrahiert wird, so ist das sich ergebende Vorzeichen für eine Bewegung vom Mikrowellenmodul 4 weg positiv und für eine Bewegung auf dieses zu negativ.

Im einfachen Fall mit nur zwei Frequenzen und ohne Verwendung der Fouriertransformation kann das Vorzeichen beispielsweise durch Differenzieren der Phasendifferenzen aufeinanderfolgender Messungen, also durch Differenzieren der Phase nach der Zeit, gewonnen werden. Dabei bedeutet negatives $d\varphi/dt$ eine Bewegung

auf das Mikrowellenmodul 4 zu und positives dφ/dt eine Bewegung von diesem weg. Die Amplitude, die in beiden Kanälen annähernd gleich ist, ergibt sich direkt durch Integrieren der Beträge der Signale. Die Frequenz erhält man hingegen nicht aus den Integralen, sondern beispielsweise durch Zählen der Nulldurchgänge in einem bestimmten Zeitintervall.

Die genannten Parameter werden der Verarbeitungstufe 3 zugeführt, welche auch mit dem Passiv-Infrarotmelder 2 verbunden ist. Der Passiv-Infrarotmelder 2 wird als bekannt vorausgesetzt und wird daher hier nicht näher beschrieben. Es wird in diesem Zusammenhang beispielsweise auf die EP-A-0 646 901, die EP-A-0 303 913 und die EP-A-0 707 294 verwiesen. Der Passiv-Infrarotmelder 2 reagiert auf die Körperstrahlung eines Menschen im infraroten Spektralbereich und der Mikrowellenmelder 1 auf die durch den Doppler-Effekt verursachte Frequenzverschiebung des von einem sich bewegenden Eindringling reflektierten Ultraschalls. Durch Kombination der beiden Prinzipien lässt sich das unerwünschte Eindringen einer Person in den geschützten Raum mit grösserer Sicherheit und Selektivität erkennen als bei Verwendung nur eines der beiden Detektionsverfahren. Auf diese Weise kann eine fehlerhafte Alarmabgabe mit grösserer Sicherheit vermieden werden.

In der Verarbeitungsstufe 3 werden die vier Parameter r, v, d und s des Mikrowellenmelders 1 und die Signale des Passiv-Infrarotmelders 2 derart miteinander verknüpft, dass eine Aussage zur Qualität des bewegten Objekts gemacht werden kann. Für die Aussage "Mensch" wird ein Alarm gesetzt, während für die Aussagen, "Ventilator", "Kleintier" oder "Insekt" keine weiteren Aktionen erforderlich sind.

Die Aussage "Mensch" erfolgt dann, wenn beide Melder ansprechen, und wenn zusätzlich die Signalstärke s für die betreffende Distanz r einen bestimmten Wert überschreitet. Ein Kleintier wird daran erkannt, dass die Signalstärke für die jeweilige Distanz den einem Menschen zugeordneten Wert nicht erreicht, gleiches gilt für ein Insekt. Ein Ventilator wird daran erkannt, dass der Passiv-Infrarotmelder 2 nicht angesprochen hat.

Mit der Radialgeschwindigkeit v und dem Vorzeichen d sind insbesondere die folgenden Auswertungen möglich:

- Durch vorzeichenrichtige Integration der Geschwindigkeit v ergibt sich beispielsweise der zurückgelegte Weg, was Störungen wie schwingende Vorhänge (Weg ist sehr klein, Vorhang bleibt an Ort) oder Ventilatoren (Weg ist gross, aber die Distanz ist konstant).und dergleichen erkennbar und unterscheidbar macht.
- Durch Kenntnis der Geschwindigkeit v kann vorhergesagt werden, wo sich das Objekt zum Zeitpunkt der nächsten Messung befinden sollte, was in der Regel die Messgenauigkeit steigern wird.
- Durch geeignete Kombination mit den Signalen des Passiv-Infrarotdetektors 2 ist eine zweidimensionale Positionsbestimmung des bewegten Objekts im Raum machbar.

Es sei noch erwähnt, dass der Bewegungsmelder selbstverständlich eine als Antimaskeinrichtung bezeichnete Einrichtung zur Sabotageüberwachung aufweist. Diese bildet nicht Gegenstand der vorliegenden Erfindung und ist daher hier nicht näher beschrieben. Es wird in diesem Zusammenhang auf die europäische Patentanmeldung Nr. 99 110 848.1 der Anmelderin der vorliegenden Patentanmeldung sowie auf die EP-A-0 476 397 verwiesen. Die Beschreibung des Mikrowellenmelders 1 als Bestandteil eines Dualmelders ist nicht einschränkend zu verstehen und soll insbesondere nicht bedeuten, dass der Mikrowellenmelder 1 nicht auch alleine, als autonomer Mikrowellenmelder, verwendet werden könnte.

Der erfindungsgemässe Bewegungsmelder hat die Hauptvorteile, dass die Falschalarmrate durch distanzunabhängige Unterdrückung der durch Kleintiere und Insekten ausgelösten Signale massiv verbessert wird, und dass durch die Integraltransformation Rauschen und andere Störungen besser unterdrückt werden können. Zusätzlich können auch mehrere bewegte Objekte aufgelöst werden, was allerdings an die digitale Signalverarbeitung erheblich höhere Ansprüche stellt, insbesondere bezüglich Speicherplatz und Rechenleistung. Diese Vorteile werden mit einem im Vergleich zu herkömmlichen Passiv-Infrarot/Mikrowellen-Dualmeldern bescheidenen Mehraufwand realisiert.

**Patentansprüche**

1. Bewegungsmelder nach dem Doppler-Prinzip, mit einem Mikrowellenmodul (4) zur Aussendung eines mindestens zwei Frequenzen ($f_1$, $f_2$) enthaltenden Mikrowellensignals in einen Überwachungsraum und zum Empfang der aus diesem Überwachungsraum reflektierten Strahlung, und mit einer an das Mikrowellenmodul (4) angeschlossenen Auswertestufe (8), in welcher aus der empfangenen Strahlung erste und zweite Dopplersignale erzeugt werden, welche einen der Entfernung (r) eines das Mikrowellensignal reflektierenden Objekts proportionalen Phasenunterschied aufweisen, **dadurch gekennzeichnet, dass** die Bestimmung des Phasenunterschieds durch einen Integraltransformation erfolgt.

2. Bewegungsmelder nach Anspruch 1, **dadurch gekennzeichnet, dass** die Integraltransformation zusätzlich zur Bestimmung des Vorzeichen (d) der Phasendifferenz und/oder der Radialgeschwindigkeit (v) des betreffenden Objekts relativ zum Melder verwendet wird.

3. Bewegungsmelder nach Anspruch 2, **dadurch gekennzeichnet, dass** die Integraltransformation zusätzlich zur Bestimmung der Signalstärke (s) des empfangenen Signals verwendet wird.

4. Bewegungsmelder nach einem der Ansprüche 1 bis 3, **dadurch gekennzeichnet, dass** dem Ausgang des Mikrowellenmoduls (4) zwei Kanäle ($K_1$, $K_2$) nachgeschaltet sind, in denen die Signale verstärkt, gefiltert und je einem Analog-/Digitalwandler ($7_1$, $7_2$) zugeführt werden, und dass die Integraltransformation darin besteht, die Beträge der Signale in den beiden Kanälen ($K_1$, $K_2$) zu integrieren, die Signale zu multiplizieren und das Ergebnis dieser Multiplikation ebenfalls zu integrieren, sowie die sich ergebenden Signal zu dividieren.

5. Bewegungsmelder nach Anspruch 2 oder 3, **dadurch gekennzeichnet, dass** das Mikrowellenmodul (4) zur Aussendung eines mehr als zwei Frequenzen ($f_1$, $f_2$) enthaltenden Mikrowellensignals ausgebildet ist.

6. Bewegungsmelder nach Anspruch 5, **dadurch gekennzeichnet, dass** dem Ausgang des Mikrowellenmoduls (4) eine der Anzahl der Frequenzen ($f_1$, $f_2$) entsprechende Zahl von Kanälen ($K_1$, $K_2$) nachgeschaltet sind, in denen die Signale verstärkt, gefiltert und je einem Analog-/Digitalwandler ($7_1$, $7_2$) zugeführt werden, und dass die Integraltransformation durch eine Fourier-Transformation, eine Fast-Fourier-Transformation oder eine Wavelet-Transformation gebildet ist.

7. Bewegungsmelder nach einem der Ansprüche 1 bis 6, **dadurch gekennzeichnet, dass** das Mikrowellenmodul (4) und die Auswertestufe (8) Teil eines ersten Detektors (1) eines Dualmelders bilden, welcher ausserdem einen zweiten Detektor, vorzugsweise einen Passiv-Infrarotdetektor (2) enthält, und dass die Signale des ersten und diejenigen des zweiten Detektors einer gemeinsamen Verarbeitungsstufe (3) zugeführt sind, in welcher eine Verknüpfung der genannten Signale erfolgt.

8. Bewegungsmelder nach Anspruch 7, **dadurch gekennzeichnet, dass** das Ergebnis der Verknüpfung eine Aussage über die Qualität des sich im Überwachungsraum bewegenden Objekts enthält.

9. Bewegunsmelder nach Anspruch 4 oder 6, **dadurch gekennzeichnet, dass** das Vorzeichen der Phasendifferenz zweier Kanäle ($K_1$, $K_2$) die Bewegungsrichtung des betreffenden Objekts ergibt.

## Claims

1. Motion sensor based on the Doppler principle, having a microwave module (4) for transmitting a microwave signal, which comprises at least two frequencies ($f_1$, $f_2$), into a surveillance area, and for receiving the radiation reflected from this surveillance area, and having an evaluation stage (8) which is connected to the microwave module (4) and in which first and second Doppler signals are generated from the received radiation, these Doppler signals having a phase difference which is proportional to the distance (r) of an object reflecting the microwave signal, **characterized in that** the phase difference is determined by an integral transformation.

2. Motion sensor according to Claim 1, **characterized in that** the integral transformation is additionally used to determine the mathematical sign (d) of the phase difference and/or the radial speed (v) of the object in question in relation to the sensor.

3. Motion sensor according to Claim 2, **characterized in that** the integral transformation is additionally used to determine the signal strength (s) of the received signal.

4. Motion sensor according to one of Claims 1 to 3, **characterized in that** two channels ($K_1$, $K_2$) are connected downstream of the output of the microwave module (4), in which channels the signals are amplified, filtered and each fed to an analogue/digital converter ($7_1$, $7_2$), and **in that** the integral transformation involves integrating the values of the signals in the two channels ($K_1$, $K_2$), multiplying the signals and likewise integrating the result of this multiplication, and dividing the resulting signal.

5. Motion sensor according to Claim 2 or 3, **characterized in that** the microwave module (4) is designed to transmit a microwave signal comprising more than two frequencies ($f_1$, $f_2$).

6. Motion sensor according to Claim 5, **characterized in that** a number of channels ($K_1$, $K_2$) corresponding to the number of frequencies ($f_1$, $f_2$) is connected downstream of the output of the microwave module (4), in which channels the signals are amplified, filtered and each fed to an analogue/digital converter ($7_1$, $7_2$), and **in that** the integral transformation is formed by a Fourier transformation, a fast Fourier transformation or a wavelet transformation.

7. Motion sensor according to one of Claims 1 to 6, **characterized in that** the microwave module (4) and the evaluation stage (8) form part of a first detector (1) of a dual sensor which also contains a second detector, preferably a passive infrared detector (2), and **in that** the signals from the first detector and those from the second detector are fed to a common processing stage (3) in which the said signals are combined.

**8.** Motion sensor according to Claim 7, **characterized in that** the result of the combination contains a statement about the quality of the object moving in the surveillance area.

**9.** Motion sensor according to Claim 4 or 6, **characterized in that** the mathematical sign of the phase difference between two channels ($K_1$, $K_2$) indicates the direction of movement of the object in question.


**Revendications**

**1.** Détecteur de mouvement fonctionnant selon le principe Doppler, comprenant un module micro-ondes (4) pour émettre un signal micro-ondes contenant au moins deux fréquences ($f_1$, $f_2$) dans un espace de surveillance et pour recevoir le rayonnement réfléchi à partir de cet espace de surveillance, et un étage d'évaluation (8) raccordé au module micro-ondes (4) et dans lequel sont produits, à partir du rayonnement réfléchi reçu, des premiers et deuxièmes signaux Doppler qui présentent une différence de phase proportionnelle à l'éloignement (r) d'un objet réfléchissant le signal micro-ondes, **caractérisé en ce que** la détermination de la différence de phase se fait par une transformation intégrale.

**2.** Détecteur de mouvement selon la revendication 1, **caractérisé en ce que** la transformation intégrale est utilisée additionnellement pour la détermination du signe (d) de la différence de phase et/ou de la vitesse radiale (v) de l'objet concerné relativement au détecteur.

**3.** Détecteur de mouvement selon la revendication 2, **caractérisé en ce que** la transformation intégrale est utilisée additionnellement pour déterminer l'intensité de signal (s) du signal reçu.

**4.** Détecteur de mouvement selon l'une des revendications 1 à 3, **caractérisé en ce que** sont montés en aval de la sortie du module micro-ondes (4) deux canaux (K1, K2) dans lesquels les signaux sont amplifiés, filtrés et amenés respectivement à un convertisseur analogique numérique ($7_1$, $7_2$) et **en ce que** la transformation intégrale consiste à intégrer les valeurs absolues des signaux dans les deux canaux (K1, K2), à multiplier les signaux et à également intégrer le résultat de cette multiplication ainsi qu'à diviser les signaux qu'on obtient.

**5.** Détecteur de mouvement selon la revendication 2 ou 3, **caractérisé en ce que** le module micro-ondes (4) est aménagé pour émettre un signal micro-ondes contenant plus de deux fréquences ($f_1$, $f_2$).

**6.** Détecteur de mouvement selon la revendication 5, **caractérisé en ce qu'**est monté en aval de la sortie du module micro-ondes (4) un nombre de canaux ($K_1$, $K_2$) correspondant au nombre des fréquences ($f_1$, $f_2$), dans lesquels les signaux sont amplifiés, filtrés et amenés respectivement à un convertisseur analogique numérique ($7_1$, $7_2$) et **en ce que** la transformation intégrale est constituée par une transformation de Fourier, une transformation de Fourier rapide ou une transformation en ondelettes.

**7.** Détecteur de mouvement selon l'une des revendications 1 à 6, **caractérisé en ce que** le module micro-ondes (4) et l'étage d'évaluation (8) constituent une partie d'un premier détecteur (1) d'un détecteur dual qui contient en outre un deuxième détecteur, de préférence un détecteur infrarouge passif (2), et **en ce que** les signaux du premier et ceux du deuxième détecteur sont amenés à un étage de traitement commun (3) dans lequel a lieu une concaténation des signaux mentionnés.

**8.** Détecteur de mouvement selon la revendication 7, **caractérisé en ce que** le résultat de la concaténation contient une information sur la qualité de l'objet en mouvement dans l'espace de surveillance.

**9.** Détecteur de mouvement selon la revendication 4 ou 6, **caractérisé en ce que** le signe de la différence de phase de deux canaux ($K_1$, $K_2$) fournit la direction du mouvement de l'objet concerné.